# EUROPEAN PATENT APPLICATION

(11) **EP 3 062 512 A1**
(43) Date of publication of application: **31.08.2016**
(21) Application number: 16156830.8
(22) Date of filing: 23.02.2016
(51) Int. Cl.: H04N 5/76, H04N 5/44, H04N 21/258, H04N 21/41, H04N 21/4147, H04N 21/462

(54) **BROADCAST RECEIVING APPARATUS AND METHOD FOR CONTROLLING THE SAME**

(30) Priority: 26.02.2015 KR 20150027620
(71) Applicant: Samsung Electronics Co., Ltd., Gyeonggi-do 16677 (KR)
(72) Inventor: SOH, Jae-min, Gyeonggi-do (KR); SUDAKOV, Sergei, Gyeonggi-do (KR); LEE, Ji-hyo, Gyeonggi-do (KR)
(74) Representative: Appleyard Lees IP LLP

(57) **Abstract**

A broadcast receiving apparatus (100, 100-1, 100-2) and a method for controlling the same are provided. The broadcast receiving apparatus includes a tuner (110) configured to receive a broadcast signal of a tuned broadcast channel, an output interface (120) configured to output image data of content signal-processed from the received broadcast signal on a screen, an input interface (130) configured to receive a specific content, and a processor (140)configured to control the tuner to receive the broadcast signal of the broadcast channel in response to the specific content being input through the input interface while a content analyzing mode is activated, and to analyze the content signal-processed from the broadcast signal received through tuner during output of the specific content to the output interface and to output the content to the output interface when the content satisfies a preset condition. Accordingly, the broadcast receiving apparatus provides a notification informing that a broadcast image is started or resumed.

## Description

### CROSS-REFERENCE TO RELATED APPLICATIONS

This application claims priority from Korean Patent Application No. 10-2015-0027620, filed on February 26, 2015, in the Korean Intellectual Property Office, the disclosure of which is incorporated herein by reference in its entirety.

### BACKGROUND

### Field

Apparatuses and methods consistent with the exemplary embodiments relate to a broadcast receiving apparatus and a method for controlling the same, and more particularly, to a broadcast receiving apparatus and a method for controlling the same, for providing a broadcast start notification service.

### Description of the Related Art

In general, when a user watches a specific program using a broadcast receiving apparatus, the program may include broadcast content that is not desired by the user. That is, when the user loses interest in viewing the program, for example, when an advertisement is displayed, there is no information about time points when an important scene is shown or when the advertisement ends. Therefore, it is inconvenient for the user to continuously monitor the program, and the user may switch between a current channel and an alternative channel. However, if the user switches back to the alternative channel, the user may not timely resume viewing of the content of the alternative channel.

### SUMMARY

Exemplary embodiments of the present disclosure overcome the above disadvantages and other disadvantages not described above. However, the exemplary embodiments are not required to overcome the disadvantages described above, and an exemplary embodiment of the present disclosure may not overcome any of the problems described above.

Aspects of the exemplary embodiments provide methods for a user to view content.

Aspects of the exemplary embodiments provide a broadcast receiving apparatus that allows a user to easily watch the user's event or interest of a program even if the user had switched from the current program to another program.

Aspects of the exemplary embodiments provide a broadcast receiving apparatus that provides a notification corresponding to a start or a resumption of a broadcast image that a user wants to watch.

According to an exemplary embodiment, a start or a resumption of a broadcast image that a user wants to watch may be provided to the user through various methods when the user is watching a different broadcast image.

According to an exemplary embodiment, when a user wants to skip specific content, such as advertisement, while watching content, such as a specific broadcast program or video on demand (VOD), a notification service may be set for the corresponding content to notify the user that the specific event occurs in the content with the set notification service while the user watches another broadcast program or uses an Internet service, and thus the user may choose to switch back to the content or to maintain a currently-watched program or a currently-used Internet service or the previous content may be automatically restored to allow to the user to resume viewing of the content.

According to an exemplary embodiment, a broadcast receiving apparatus is provided. The broadcast receiving apparatus includes a tuner configured to receive a broadcast signal of a tuned broadcast channel, an output interface configured to output image data of content signal-processed from the received broadcast signal on a screen, an input interface configured to receive a specific content, and a processor configured to control the tuner to receive the broadcast signal of the broadcast channel in response to the specific content being input through the input interface while a content analyzing mode is activated, and to analyze the content signal-processed from the broadcast signal received through the tuner during output of the specific content to the output interface and to output the content to the output interface when the content satisfies a preset condition.

The processor may analyze whether a currently-provided image of the content signal-processed from the broadcast signal of the broadcast channel is an advertisement image or a broadcast image during output of the specific content, and as the analysis result, upon determining that the currently-provided image of the image content is the broadcast image, the processor may output the content to the output interface.

The processor may analyze at least one of image data, audio data, and subtitles data, contained in the content, and pre-stored additional information in relation to a plurality of broadcast channels and analyze whether the currently-provided image of the content is an advertisement image or a broadcast image.

The tuner may include a first tuner configured to receive the broadcast signal of the broadcast channel, and a second tuner configured to receive a broadcast signal of another broadcast channel, wherein the processor may analyze the content signal-processed from the broadcast signal of the broadcast channel, received through the first tuner, during output of content signal-processed from the broadcast signal of the another broadcast channel, received through the second tuner, and upon determining that the currently-provided image of the content is a broadcast image, the processor may output the content to the output interface.

As the analysis result, upon determining that the currently-provided image of the content is a broadcast image, the processor may generate an image signal and output the image signal to the output interface to output one of the specific content and the content on a main screen and to output the other on a sub screen.

The output interface may include a display configured to display image data of the content, and the display may display the specific content and the content using one of picture in picture (PIP), picture by picture (PBP), and picture of picture (POP).

As the analysis result, upon determining that the currently-provided image of the content is a broadcast image, the processor may generate on screen display (OSD) information for indicating the content of the broadcast channel is started and outputs the OSD information and the specific content to the output interface, and in response to a user command being input during display of the OSD information, the processor may output the content to the output interface.

When the content of the broadcast channel is sports content, the processor may analyze whether a preset event occurs in a sports game during output of the specific content, and as the analysis result, when the preset event occurs in the sports game, the processor may output the sports content to the output interface.

The processor may analyze whether the preset event occurs based on at least one of score information contained in a region showing a game processing situation extracted from image data of the sports content and an audio signal level of audio data included in the sports content.

The broadcast receiving apparatus may further include a user interface configured to receive a user command, wherein the processor may activate a content analyzing mode for analysis of content of the broadcast channel according to a user command input through the user interface, and may stop analysis of the content or deactivates the content analyzing mode based on at least one of a time point in which reproduction of the image content is terminated based on additional information pre-stored in relation to a plurality of broadcast channels and a time point in which a predetermined threshold time period elapses based on a time point in which a user command for channel change is input.

According to an aspect of an exemplary embodiment, a method for controlling a broadcast receiving apparatus is provided. The method includes receiving a broadcast signal of a tuned broadcast channel, outputting image data of content signal-processed from the received broadcast signal on a screen, receiving the broadcast signal of the broadcast channel in response to a specific content corresponding to a user command being input while a content analyzing mode is activated, analyzing the content signal-processed from the received broadcast signal during output of the specific content on the screen, and outputting the content when the image content satisfies a preset condition.

The analyzing may include analyzing whether a currently-provided image of the content signal-processed from the broadcast signal of the broadcast channel is an advertisement image or a broadcast image during output of the specific content, and the outputting of the content may include, as the analysis result, upon determining that the currently-provided image of the content is the broadcast image, outputting the content.

The analyzing may include analyzing at least one of image data, audio data, and subtitles data, contained in the content, and pre-stored additional information in relation to a plurality of broadcast channels and analyzing whether the currently-provided image of the content is an advertisement image or a broadcast image.

The receiving may include receiving the broadcast signal of the broadcast channel and a broadcast signal of another broadcast channel through at least one of first and second tuners, and the outputting of the content may include analyzing the content signal-processed from the broadcast signal of the broadcast channel, received through the first tuner, during output of content signal-processed from the broadcast signal of the another broadcast channel, received through the second tuner, and upon determining that the currently-provided image of the content is a broadcast image, outputting the content.

The outputting of the content may include, as the analysis result, upon determining that the currently-provided image of the content is a broadcast image, generating an image signal and outputting the image signal to output one of the specific content and the content on a main screen and to output the other on a sub screen.

The outputting of the image content may include displaying the source data of and the content using one of picture in picture (PIP), picture by picture (PBP), and picture of picture (POP).

The outputting of the content, as the analysis result, upon determining that the currently-provided image of the content is a broadcast image, generating on screen display (OSD) information for indicating that the content of the broadcast signal is started and outputting the generated OSD information and an image signal of the specific content, and in response to a user command being input during display of the OSD information, outputting the content.

When the content of the broadcast channel is sports content, the analyzing may include analyzing whether a preset event occurs in a sports game during output of the specific content, and the outputting of the content may include, as the analysis result, when the preset event occurs in the sports game, outputting the sports content.

The analyzing may include analyzing whether the preset event occurs based on at least one of score information contained in a region showing a game processing situation extracted from image data of the sports content and an audio signal level of audio data included in the sports content.

The method may further include stopping analysis of the content, wherein the stopping may include stopping the analysis of the content or deactivating the content analyzing mode based on at least one of a time point in which reproduction of the content is terminated based on additional information pre-stored in relation to a plurality of broadcast channels and a time point in which a predetermined threshold time period elapses based on a time point in which a user command for channel change is input.

According to an exemplary embodiment, the broadcast receiving apparatus may provide a notification indicating that a broadcast image is started or resumed. Accordingly, when an advertisement image of the broadcast channel is output, the user may watch the broadcast image directly from a time point when the broadcast image is resumed without frequently checking whether the advertisement image is terminated and the broadcast image is resumed while watching of the specific content of another broadcast channel.

Additional and/or other aspects and advantages of the invention will be set forth in part in the description which follows and, in part, will be obvious from the description, or may be learned by practice of the invention.

### BRIEF DESCRIPTION OF THE DRAWINGS

The above and/or other aspects of the present disclosure will be more apparent by describing certain exemplary embodiments of the present disclosure with reference to the accompanying drawings, in which:
FIG. 1 is a block diagram of a broadcast receiving apparatus according to an exemplary embodiment;
FIG. 2 is a detailed block diagram illustrating components of a broadcast receiving apparatus according to an exemplary embodiment;
FIG. 3 is a detailed block diagram illustrating components of a broadcast receiving apparatus according to an exemplary embodiment;
FIG. 4 is a diagram illustrating an example of a mode setting user interface (UI) for analysis of image content of a previous channel in a broadcast receiving apparatus according to an exemplary embodiment;
FIG. 5 is a diagram illustrating content of a tuned channel according to an exemplary embodiment;
FIG. 6 is a diagram illustrating a reproduced image of content of a tuned channel according to an exemplary embodiment;
FIG. 7 is a diagram illustrating an example in which a broadcast receiving apparatus determines whether a currently-reproduced image of content is a broadcast image, according to an exemplary embodiment;
FIG. 8 is a diagram illustrating an example in which a broadcast receiving apparatus returns to a channel when content of the channel is resumed, according to an exemplary embodiment;
FIG. 9 is a diagram illustrating an example in which a broadcast receiving apparatus returns to a channel when content of the channel is resumed, according to an exemplary embodiment;
FIG. 10 is a diagram illustrating an example in which a broadcast receiving apparatus returns to a channel when content of the channel is resumed, according to an exemplary embodiment;
FIG. 11 is a diagram illustrating an example in which a broadcast receiving apparatus returns to a channel when an event occurs according to an exemplary embodiment; and
FIG. 12 is a flowchart of a method of controlling a broadcast receiving apparatus according to an exemplary embodiment.

### DETAILED DESCRIPTION OF THE EXEMPLARY EMBODIMENTS

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. Also, well-known functions or constructions are not described in detail because they would obscure the disclosure with unnecessary detail.

The terms "first," "second," etc. may be used to describe diverse components, but the components are not limited by the terms. The terms are only used to distinguish one component from another component.

In addition, it will be understood that when an element or layer is referred to as being "on", "connected to", "coupled to", or "adjacent to" another element or layer, it can be directly on, connected, coupled, or adjacent to the other element or layer, or intervening elements or layers may be present. In contrast, when an element is referred to as being "directly on," "directly connected to", "directly coupled to", or "immediately adjacent to" another element or layer, there are no intervening elements or layers present.

The terms used in the present application are only used to describe the exemplary embodiments, but are not intended to limit the scope of the disclosure. In addition, the singular expression does not limit the present disclosure to have singular component or step. Instead, the present disclosure may comprise multiple components or steps even if described in singular expression. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" implemented with specific hardware, and may be implemented with at least one processor.

Certain exemplary embodiments of the present disclosure will now be described in greater detail with reference to the accompanying drawings.

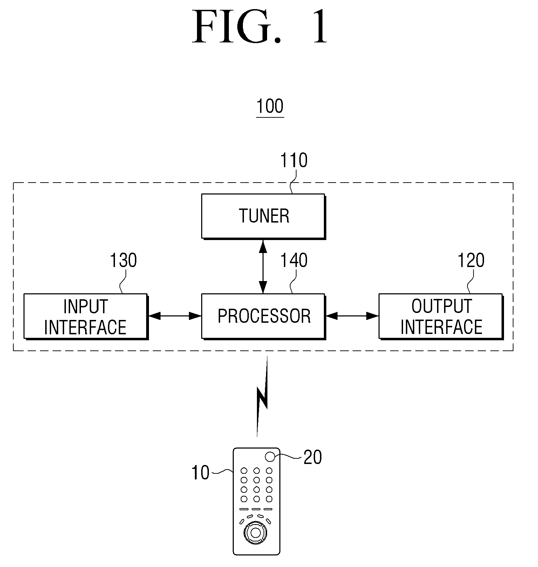

FIG. 1 is a block diagram of a broadcast receiving apparatus 100 according to an exemplary embodiment.

As illustrated in FIG. 1, the broadcast receiving apparatus 100 may be a terminal apparatus that is capable of receiving image content provided by a broadcast provider, such as a server or a terrestrial broadcaster. The broadcast receiving apparatus 100 may be a display apparatus that is coupled to a display device, e.g., a smart television (TV), a smart phone, and a tablet personal computer (PC), to autonomously display an image or a set-top box for outputting image content provided by the broadcast provider to a connected display device.

The broadcast receiving apparatus 100 may include a tuner 110, an output interface 120, an input interface 130, and a processor 140.

The tuner 110 may receive a broadcast signal of a broadcast channel selected by a user from a plurality of contents received from a broadcast provider. In addition, the output interface 120 may output image content and/or audio content that is signal-processed received through the tuner 110. Here, the image content may include at least one of broadcast content and advertisement content. The audio content may be audio content associated with the video content. The received content may be audio/video (AV) content.

In detail, the tuner 110 may tune a broadcast channel requested by the user and receive a broadcast signal, such as terrestrial broadcasting or cable broadcasting, provided by a broadcast provider through the tuned broadcast channel. Accordingly, the output interface 120 may output content that is signal-processed in connection with the broadcast signal received through the tuner 110. The content may include at least one of image data, audio data, and subtitle data. The image data, subtitle data. and the audio data may be signal-processed form suitable for output through the output interface 120. Accordingly, the output interface 120 may output at least one of image data and subtitles data which are signal-processed on a screen and output audio data to a speaker.

The input interface 130 may receive specific content corresponding to a user command. Here, the specific content may be at least one of content provided through another broadcast channel, pre-stored image content, content provided by a server, and content received from a peripheral terminal apparatus that is capable of wirelessly communicating with the broadcast receiving apparatus 100 or application content that provides a user interface.

The processor 140 may control an overall operation of each component of the broadcast receiving apparatus 100. In particular, in response to the specific content being input through the input interface 130 while a content analyzing mode is activated (the activation of content analyzing mode will be illustrated in the following disclosure), the processor 140 may control the tuner 110 to receive a broadcast signal of a broadcast channel according to the user command. The processor 140 may output the specific content to the output interface 120 during reception of the broadcast signal of the broadcast channel through the tuner 110.

As described above, the specific content may be at least one of content provided through another broadcast channel, pre-stored content, content provided by a content server, and content received from a peripheral terminal apparatus that is capable of wirelessly communicating with the broadcast receiving apparatus 100 or application content that provides a user interface.

In response to the specific content being output to the output interface 120, the processor 140 may analyze content that is signal-processed from the broadcast signal of the broadcast channel received through the tuner 110, and when the image content satisfies a preset condition, the processor 140 may output the content of the broadcast channel to the output interface 120. Accordingly, the output interface 120 may stop outputting the specific content and output the image content of the broadcast channel.

In detail, when the content of the broadcast channel corresponding to a channel tuning command of the user is output through the output interface 120 and the specific content is input through the input interface 130 while the content analyzing mode is activated, the processor 140 may output the external source to the output interface 120. Accordingly, the output interface 120 may stop outputting the image content of the broadcast channel and output the external source.

The processor 140 may analyze the content of the broadcast channel while the specific content is output through the output interface 120 and determine whether a currently-provided image of the content of the broadcast channel is a broadcast image (for example, an image of a desired program) or an advertisement. As the determination result, when the currently-provided image of the image content of the broadcast channel is an advertisement, the processor 140 may control the output interface 120 to continuously output another content (the specific content). When the currently-provided image of the content of the broadcast channel is a broadcast image, the processor 140 may output image content of the broadcast channel to the output interface 120. Accordingly, the output interface 120 may stop outputting the specific content and output the image content of the broadcast channel.

An operation for analyzing content of a broadcast channel and outputting the content of the broadcast during output of the specific content will be described below in detail.

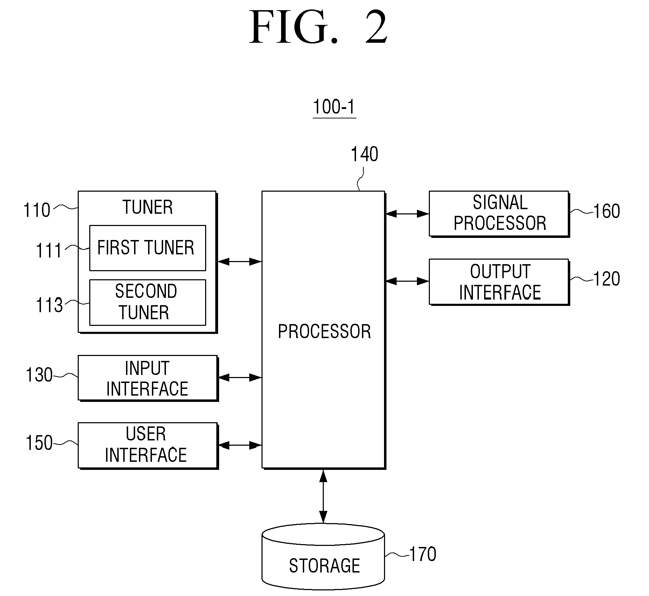

FIG. 2 is a detailed block diagram illustrating detailed components of a broadcast receiving apparatus 100-1 according to an exemplary embodiment.

As illustrated in FIG. 2, the broadcast receiving apparatus 100-1 may be embodied as a terminal apparatus, such as a set-top box, and may output content of a broadcast channel to an outputting apparatus that can output an image and a sound of the content of the broadcast channel (through the output interface 120). In this case, the broadcast receiving apparatus 100-1 may further include a user interface 150, a signal processor 160, and storage 170 in addition to the tuner 110, the output interface 120, the input interface 130, and the processor 140, which have been described above.

As described above, the tuner 110 that receives a broadcast signal of the tuned broadcast channel may tune a plurality of broadcast channels and receive a broadcast signal of each tuned broadcast channel. To this end, the tuner 110 may receive a plurality of broadcast signals through first and second tuners 111 and 113 or may be configured with a single component to receive broadcast signals of a plurality of broadcast channels.

Among the components illustrated in FIG. 2, the output interface 120, the input interface 130, and the processor 140 have been described with reference to FIG. 1, and thus will not be described in detail.

The user interface 150 may receive a user command transmitted from a remote control device 10 (shown in FIG. 1) to control an operation of the broadcast receiving apparatus 100-1. In detail, the remote control device 10 may transmit a user command, such as a channel tuning command and a function setting command, of the broadcast receiving apparatus 100-1, and so on to the broadcast receiving apparatus 100-1 through a control signal, such as an infrared (IR) signal and/or a radio frequency (RF) signal. Accordingly, the user interface 150 may receive the user command, such as the channel tuning command and the function setting command of the broadcast receiving apparatus 100-1, from the control signal received through the remote control device 10.

The remote control device 10 that controls the operation of the broadcast receiving apparatus 100-1 may be configured in such a way that a hot key 20 (shown in FIG. 1) for activation of the content analyzing mode of the broadcast receiving apparatus 100-1 is included in a housing. Accordingly, in response to the hot key 20 included in the remote control device 10 being selected, the remote control device 10 may transmit a control signal of the user command for activation of the content analyzing mode to the broadcast receiving apparatus 100-1. In response to the control signal being input, the user interface 150 may output the user command for activation of the content analyzing mode to the processor 140.

The signal processor 160 may signal-process the broadcast signal of the broadcast channel, received through the tuner 110, into a form suitable for output. In an exemplary embodiment, the signal processor 160 may demultiplex the received broadcast signal of the broadcast channel to separate image data and audio data. The broadcast signal of the broadcast channel may further include additional data, such as subtitles data, as well as image data and audio data. In this case, the signal processor 160 may demultiplex the received broadcast signal of the broadcast channel to separate image data, audio data, and additional data contained in the content.

After image data and audio data are separated, the signal processor 160 may signal-process the image data and audio data. In detail, the signal processor 160 may decode the image data separated from the content and then encode the decoded image data to convert the decoded image data into a suitable form for output. In addition, the signal processor 160 may decode the audio data separated from the content and then convert the decoded audio data into the analog form of acoustic data. Accordingly, the output interface 120 may output image data that are signal-processed through the signal processor 160 to an image outputting apparatus that outputs an image. In addition, the output interface 120 may output audio data that are signal-processed through the signal processor 160 to a speaker that outputs sound.

The storage 170 may store a content analyzing code for determining whether the aforementioned currently-provided image of the image content of the broadcast channel is a broadcast image or an advertisement image. In addition, the storage 170 may store an operating system (OS) program for controlling operations of the broadcast receiving apparatus 100-1.

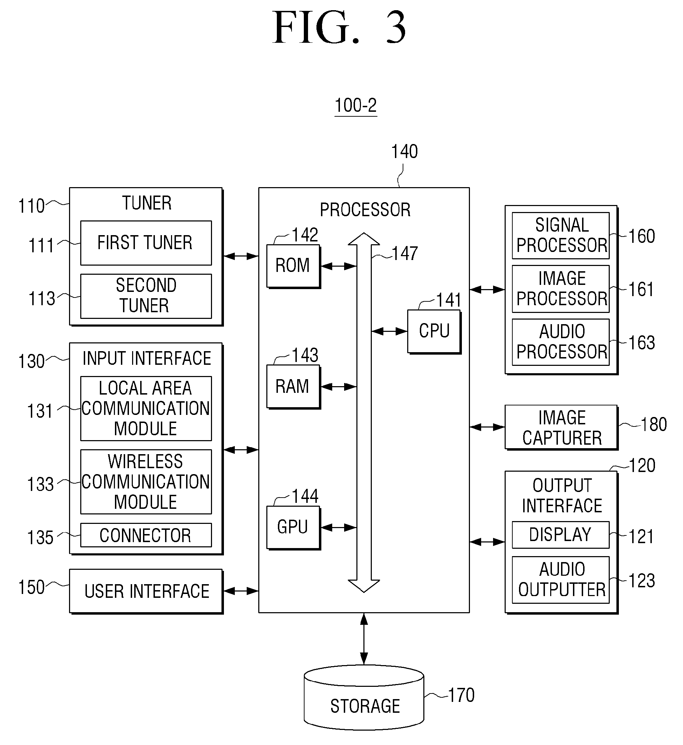

FIG. 3 is a detailed block diagram illustrating detailed components of a broadcast receiving apparatus 100-2 according to an exemplary embodiment.

As illustrated in FIG. 3, the broadcast receiving apparatus 100-2 is embodied as a display apparatus, such as a smart TV, a smart phone, and a tablet PC. The broadcast receiving apparatus 100-2 may further include the user interface 150, the signal processor 160, the storage 170, and an image capturer 180, in addition to the tuner 110, the output interface 120, the input interface 130, and the processor 140, which have been described above.

As described above, the tuner 110 that receives the broadcast signal of the tuned broadcast channel may tune a plurality of broadcast channels and receive a broadcast signal of each tuned broadcast channel. In this embodiment, the tuner 110 may receive a plurality of broadcast signals through the first tuner 111 and the second tuner 113, or may be configured with a single component to receive broadcast signals of a plurality of broadcast channels. The output interface 120 may output image and audio data of content that is signal-processed from the broadcast signal of the broadcast channel. In this embodiment, the output interface 120 may include a display 121 and a speaker 123 referred to as audio outputter in FIG. 3. Accordingly, the display 121 may display image data of content that is signal-processed from the broadcast signal of the broadcast channel, and the speaker 123 may output audio data of the content that is signal-processed from the broadcast signal of the broadcast channel in the form of audible sounds.

The input interface 130 may communicate with a peripheral terminal apparatus that is capable of communicating with a content server or the broadcast receiving apparatus 100-2 via wired or wireless communications to receive content requested by a user. In this case, the input interface 130 may include a local area communication module 131, a wireless communication module 133, such as a wireless LAN module, and a connector 135 including at least one of wired communication modules, such as a high-definition multimedia interface (HDMI), a universal serial bus (USB), and institute of electrical and electronics engineers (IEEE) 1394. The local area communication module 131 may be a component that performs local area communication wirelessly between the broadcast receiving apparatus 100-2 and a peripheral device. The local area communication module 131 may include at least one of a Bluetooth module, an infrared data association (IrDA) module, a near field communication (NFC) module, a WiFi module, and a Zigbee module.

The wireless communication module 133 may be a module that is connected to an external network according to a wireless communication protocol, such as IEEE, to perform communication. In addition, the wireless communication program may further include a mobile communication module that accesses a mobile communication network to perform communication according to various mobile communication standards, such as 3^{rd} generation (3G), a 3^{rd} generation partnership project (3GPP), and long term evolution (LTE).

The input interface 130 may be embodied using the aforementioned various local area communication methods and may employ other communication technologies that are not stated in the specification, as necessary.

The connector 135 may provide an interface with various devices, such as USB 2.0, USB 3.0, HDMI, and IEEE 1394 devices. The connector 135 may transmit data stored in the storage 170 of the broadcast receiving apparatus 100-2 or receive data from an external device through a wired cable connected to the connector 135 according to a control command of the processor 140. In addition, the connector 135 may receive power from a power source through a wired cable that is physically connected to the connector 135.

The aforementioned processor 140 may include a central processing unit (CPU) 141, a read-only memory (ROM) 142, a random-access memory (RAM) 143, and a graphic processing unit (GPU) 154, which may be connected to each other through a bus 147.

The CPU 141 may access the storage 170 and perform booting using an operating system (OS) stored in the storage 170. In addition, the CPU 141 may perform various operations executing various programs, contents, data, and so on, which are stored in the storage 170.

The ROM 142 may store a command set for system booting. In response to an activation command being input to supply power, the CPU 141 may copy the OS stored in the storage 170 to the RAM 143 according to the command stored in the ROM 142 and execute the OS to boot the system. When booting is completed, the CPU 141 may copy the various programs stored in the storage 170 to the RAM 143 and execute the programs copied to the RAM 143 to perform various operations.

The GPU 144 may generate a display image containing various objects, such as an icon, an image, and a text. In detail, the GPU 144 may calculate an attribute value, such as a coordinate value, a shape, a size, and color for displaying each object according to a layout of an image based on the received control command and generate display images with various layouts, containing objects, based on the calculated attribute value.

The aforementioned operation of the processor 140 may be performed according to the program stored in the storage 170.

As described above, the user interface 150 may receive a user command transmitted from the remote control device 10 that controls the operation of the broadcast receiving apparatus 100-2. In detail, the user interface 150 may receive a control signal for a user command, such as a channel tuning command received through the remote control device 10, a function setting command of the broadcast receiving apparatus 100, and so on. In particular, the user interface 150 may receive the control signal for the user command for activation of the content analyzing mode received through the remote control device 10.

In detail, the remote control device 10 that controls an operation of the broadcast receiving apparatus 100-2 may be configured in such a way that a hot key 20 for receiving a user command for activation of a content analyzing mode is included in a housing, as described with reference to FIG. 1.

Accordingly, in response to the hot key 20 included in the remote control device 10 being selected, the remote control device 10 may transmit a control signal for a user command for activation of a content analyzing mode of the broadcast receiving apparatus 100-2 to the broadcast receiving apparatus 100-2. In response to the control signal being input, the user interface 150 may output the user command for activation of the content analyzing mode to the processor 140 based on the input control signal.

In addition, when the broadcast receiving apparatus 100-2 is embodied as a display apparatus, such as a smart TV and a smart phone, the broadcast receiving apparatus 100-2 may further include other hardware inputs, switches, etc. for power on/off, channel change, and volume control, and a touch panel for receiving a user touch command.

The signal processor 160 that signal-processes the broadcast signal of the broadcast channel received through the tuner 110 may include an image processor 161 and an audio processor 163. In detail, when the received broadcast signal of the broadcast channel is separated into image data and audio data via demultiplexing, the image processor 161 may decode the image data demultiplexed from the broadcast signal and then perform signal processing, such as scaling and frame rate conversion, on the decoded image data to convert the image into image data into a form suitable for output through the display 121. Similarly, the audio processor 163 may decode audio data separated from the broadcast signal and then convert the audio data into a form suitable for output through the speaker 123.

The image capturer 180 may capture an image of a surrounding environment of the broadcast receiving apparatus 100-2.

In addition, the storage 170 may store a program code of a content analyzing module for determining whether a currently-provided image of image content that is signal-processed from the aforementioned broadcast signal of the broadcast channel is a broadcast image or an advertisement image. In addition, the storage 170 may store an application program providing a user interface using an operating system program for controlling an operation of the broadcast receiving apparatus 100 and resources of an operating system. Here, the operating system may be a program operates each component of the broadcast receiving apparatus 100 when the broadcast receiving apparatus 100 is activated.

In addition, the storage 170 may store various multimedia data, image content, and data received from an external source, which are processed by the processor 140. The storage 170 may be embodied as at least one of a ROM, a RAM, or a memory card (e.g., a secure digital (SD) card and a memory stick), a non-volatile memory, a volatile memory, a hard disk drive (HDD), and a solid state drive (SSD), which are detachable/mountable from/on the broadcast receiving apparatus 100.

Hereinafter, the aforementioned processor 140 will be described in more detail. As described above, when a content analyzing mode is activated and images of content of the tuned broadcast channel are displayed through the display 121, in response to a specific content being input through the input interface 130, the processor 140 may control the output interface 120 to output the specific content to at least one of the display 121 and the speaker 123 and control the tuner 110 to receive a broadcast signal of the currently-displayed content.

Accordingly, in response to the specific content being output through at least one of the display 121 and the speaker 123, the processor 140 may analyze the signal-processed content from the broadcast signal of the broadcast channel, received through the tuner 110, during output of the specific content through at least one of the display 121 and the speaker 123. As a result, when content of the broadcast channel satisfies a preset condition, the processor 140 may control the output interface 120 to output content of the broadcast channel. Accordingly, the output interface 120 may output content of a broadcast channel through at least one of the display 121 and the speaker 123.

In detail, in response to a user command for activation of a content analyzing mode being input through the user interface 150 during output of the content of the broadcast channel, the processor 140 may display a mode setting UI for setting a preset condition in relation to analysis of the content of the broadcast channel.

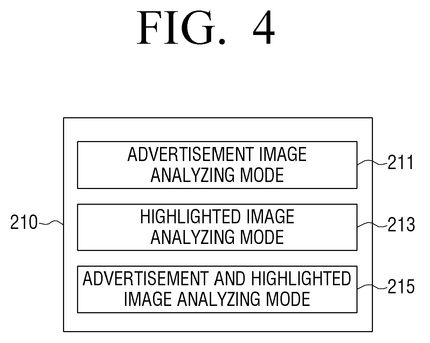

FIG. 4 is a diagram illustrating an example of a mode setting UI 210 for analysis of content of a previous channel in a broadcast receiving apparatus according to an exemplary embodiment.

As illustrated in FIG. 4, in response to a user command for activation of a content analyzing mode being input through the user interface 150 during output of content of a broadcast channel, the processor 140 may control the display 121 to generate the mode setting UI 210 and to display the mode setting UI 210. Here, the mode setting UI 210 may include an advertisement image analyzing mode 211, a highlighted image analyzing mode 213, and an advertisement and highlighted image analyzing mode 215.

The advertisement image analyzing mode 211 may be an analyzing mode for determining whether a currently-reproduced image of the content of the broadcast channel is an advertisement image, and the highlighted image analyzing mode 213 may be an analyzing mode for detection of an event containing a period of the broadcast image of the content, in which a preset event occurs. In addition, the advertisement and highlight image analyzing mode 215 may be an analyzing mode for determining whether a currently-reproduced image of the content of the broadcast channel is an advertisement image and for detection of an event containing a period of a corresponding broadcast image, in which a preset event occurs, when the currently-reproduced image is the broadcast image.

In response to one mode being selected from a plurality of analyzing modes contained in the mode setting UI 210 and a specific content being output through the output interface 120, the processor 140 may analyze (image of) content of the broadcast channel of the broadcast channel based on the selected analyzing mode.

In detail, in response to the specific content being input through the input interface 130 during selection of one mode from the plurality of analyzing modes contained in the mode setting UI 210, the processor 140 may control the output interface 12 to output the specific content. Accordingly, the output interface 120 may display the specific content through the display 121. During display of the specific content through the display 121, the processor 140 may control the tuner 110 to receive the content of the broadcast channel. Accordingly, the tuner 110 may receive the broadcast signal of the broadcast channel. In response to the broadcast signal of the broadcast channel being received during display of the specific content, the processor 140 may analyze signal-processed content of the broadcast signal based on a pre-selected analyzing mode.

According to an exemplary embodiment, when the content of the broadcast channel is analyzed based on the advertisement image analyzing mode 211, the processor 140 may analyze at least one of image data, audio data, and additional data, such as subtitles data, contained in the content of the broadcast channel, and additional information pre-stored in the storage 170 in relation to content for each of the plurality of channels to determine whether a currently-provided image of the content of the broadcast channel is an advertisement image. Here, the additional information may be electronic program guide (EPG) information.

During analysis of the image data contained in the content of the broadcast channel, the processor 140 may analyze whether the currently-provided image of the content of the broadcast channel is a broadcast image or an advertisement image based on the following exemplary embodiment.

According to an exemplary embodiment, the processor 140 may analyze YUV brightness and color histogram difference between a previous frame and a current frame of the content to determine whether an image of the current-image frame is a broadcast image or an advertisement image.

According to an exemplary embodiment, the processor 140 may analyze whether an edge of an image of the previous frame is contained in one region of the image of the current image frame to determine whether the image of the current image frame is a broadcast image or an advertisement image.

According to an exemplary embodiment, when the content is sports content, the processor 140 may determine whether the image of the current frame is an advertisement image based on a field color pre-defined for each sport and a distribution degree of color corresponding to the field color.

Through the analysis, when the currently-provided image of the content of the broadcast channel is a broadcast image, the processor 140 may control the output interface 120 to output the content of the broadcast channel. Accordingly, the output interface 120 may output the content of the broadcast channel to the display 121 and the speaker 123, and thus the display 121 may display data of the content and the speaker 123 may output audio data of the content in the form of audible sounds.

The aforementioned specific content may be content of another broadcast channel corresponding to a channel change command of a user. In this case, as described above, the tuner 110 may include the first tuner 111 for receiving a broadcast signal of a broadcast channel (hereinafter, referred to as a first channel) and the second tuner 113 for receiving a broadcast signal of another broadcast channel (hereinafter, referred to as a second channel). However, the present disclosure is not limited thereto, and the tuner 110 may be configured with a single component to receive broadcast signals of the first and second channels.

In response to the broadcast signal of the first channel and the broadcast signal of the second channel being received through the first and second tuners 111 and 113, the processor 140 may analyze whether a currently-reproduced image of content signal-processed from the broadcast signal of the first channel is a broadcast image or an advertisement image during output of content signal-processed from the broadcast signal of the second channel (the aforementioned specific content).

As the analysis result, when the currently-reproduced image of the content of the first channel is determined as a broadcast image, the processor 140 may control the output interface 120 to output the content of the first channel. Accordingly, the output interface 120 may output the content of the first channel to the display 121 and the speaker 123, and thus the display 121 may display image data of the content and the speaker 123 may output audio data of the content in the form of audible sounds.

According to an exemplary embodiments, when the currently-reproduced image of the content of the broadcast channel is determined as a broadcast image during output of the specific content, the processor 140 may generate an image signal and output the image signal to the output interface 120 to output one of the specific content and the content of the broadcast channel to a main screen and to output the other to a sub screen. Accordingly, the display 121 may output one of the specific content and the content of the broadcast channel to the main screen and the other to the sub screen using one of picture in picture (PIP), picture by picture (PBP), and a double screen.

According to an exemplary embodiments, when the currently-reproduced image of the content of the broadcast channel is determined as a broadcast image during output of the specific content, the processor 140 may generate on screen display (OSD) information for informing the user with a start of the broadcast channel and output the generated OSD information and an image signal of the specific content to the output interface 120. Accordingly, the display 121 may display the OSD information for informing the start concurrently when the specific content is also displayed. Here, the OSD information may be a UI for informing the user that broadcast of the content of the broadcast channel is started and allow the user to input a user command to control whether the current channel (for example, the channel corresponding to the specific content) is switched into the broadcast channel.

In response to the user command being input during display of the OSD information for informing the user with a broadcasting start, the processor 140 may control the output interface 120 to output the content of the broadcast channel. Accordingly, the output interface 120 may output the content of the broadcast channel to the display 121 and the speaker 123, and thus the display 121 may display image data of the content and the speaker 123 may output audio data of the content in the form of audible sounds.

However, the present disclosure is not limited thereto, and the aforementioned OSD information for informing a broadcasting start may be a user equipment (UE) for informing that broadcast of the content of the broadcast channel is started and receiving a reproduction command of the content of the corresponding broadcast channel from a peripheral terminal apparatus in communication with the broadcast receiving apparatus 100-2.

In response to a user command being input during display of the OSD information for informing a broadcasting start, the processor 140 may transmit the content of the broadcast channel or content information of the content of the broadcast channel to a peripheral terminal apparatus set by a user among at least one communicable peripheral terminal apparatus. Accordingly, the broadcast receiving apparatus 100-2 may display the specific content on a screen and a peripheral terminal apparatus may display the content of the broadcast channel on a screen.

According to an exemplary embodiment, when the content of the broadcast channel is analyzed based on the highlighted image analyzing mode 213, the processor 140 may analyze whether a preset event occurs from the content of the broadcast channel during output of the specific content. Here, the content of the broadcast channel may be sports.

In this case, the processor 140 may determine whether a preset event occurs based on at least one of core information contained in a region showing a game processing situation extracted from image data of the content and/or an audio signal level of audio data contained in the content.

For example, if the content corresponds to a soccer game, the preset event may be a scoring event. Through such analysis, upon determining that a scoring event occurs in the game, the processor 140 may control the output interface 120 to output the content. Accordingly, the output interface 120 may output the content to the display 121 and the speaker 123, and thus the display 121 may display image data of the content and the speaker 123 may output audio data of the content in the form of audible sounds.

However, the present disclosure is not limited thereto, and upon determining that the preset event occurs in a game, the processor 140 may detect a time period in which the event occurs. Then the processor 140 may control the output interface 120 to output one of content corresponding to the time period and the specific content on a main screen and to output the other on a sub screen. Accordingly, the display 121 may output one of the content corresponding to the time period and the specific content on the main screen and output the other on the sub screen.

According to an exemplary embodiment, when the content of the broadcast channel is analyzed based on the advertisement and highlighted image analyzing mode 215, the processor 140 may analyze at least one of image data, audio data, and additional data, such as subtitles data, contained in the content of the broadcast channel, and additional information pre-stored in the storage 170 in relation to a plurality of broadcast channels to determine whether a currently-provided image of the content of the broadcast channel is a broadcast image or an advertisement image during output of the specific content.

As the determination result, upon determining that the currently-provided image of the content of the broadcast channel is a broadcast image, the processor 140 may analyze whether a preset event occurs according to the content of the broadcast channel. Here, the content of the broadcast channel may be sports. As the analysis result, upon determining that a scoring event occurs in a game, the processor 140 may control the output interface 120 to output the content. Accordingly, the output interface 120 may output the content to the display 121 and the speaker 123, and thus the display 121 may display image data of the content and the speaker 123 may output audio data of the content in the form of audible sounds.

However, the present disclosure is not limited thereto, and upon determining that the currently-provided image of the content of the broadcast channel is a broadcast image, the processor 140 may analyze whether a preset event occurs according to the image content of the broadcast channel during output of the specific content. Here, the content of the broadcast channel may be sports content.

As the analysis result, upon determining that a scoring event occurs in a game, the processor 140 may detect a time period containing the scoring event. Then the processor 140 may control the output interface 120 to output one of content corresponding to the time period and another content (for example, the specific content) on a main screen. Accordingly, the display 121 may output one of the content corresponding to the time period and the specific content on a screen and display the other on a sub screen. However, the present disclosure is not limited thereto, and the processor 140 may analyze a currently-provided image of content of the broadcast channel based on an image captured through the image capturer 180 and provide the analysis result to a user.

In detail, the processor 140 may detect an object of an image that is captured by the image capturer 180 in real time during output of the specific content. Then the processor 140 may compare at least one detected object with an image pre-stored in the storage 170 to determine whether at least one object is similar to the pre-stored image. As a result, upon determining that the at least one object is not similar to the pre-stored image, the processor 140 may analyze whether the currently-provided image of the content of the broadcast channel is a broadcast image or an advertisement image.

Upon determining that a user who watches the image content of the broadcast channel is not currently present in a preset area, the processor 140 may analyze whether a currently-provided image of the content of the broadcast channel is a broadcast image or an advertisement image.

As the analysis result, when the currently-provided image of the content of the broadcast channel is a broadcast image, the processor 140 may transmit a notification message indicating that broadcast of the content of the broadcast channel is started, the corresponding content, or content information of the content of the broadcast channel, to a pre-registered peripheral terminal apparatus.

According to an exemplary embodiments, the processor 140 may stop analysis of the content of the broadcast channel or deactivate an activated content analyzing mode during output of the specific content according to a preset condition. According to an exemplary embodiment, the processor 140 may stop analysis of the content of the broadcast channel, which is being analyzed, or deactivate an activated content analyzing mode, based on a time point when reproduction of the content of the broadcast channel, which is being analyzed based on additional information pre-stored in the storage 170 in relation to a plurality of broadcast channels, is terminated.

According to an exemplary embodiment, when a predetermined threshold time period elapses based on a time point in which a user command for channel switch is input, the processor 140 may stop analysis of the content of the broadcast channel, which is being analyzed, or deactivate an activated content analyzing mode.

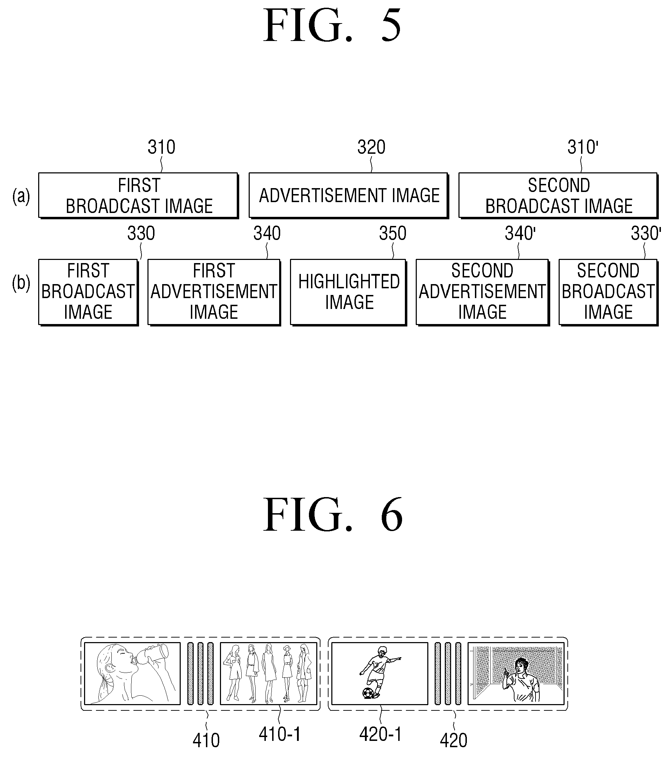

FIG. 5 is a diagram illustrating content of a tuned channel according to an exemplary embodiment. FIG. 6 is a diagram illustrating a reproduced image of content of tuned channel according to an exemplary embodiment.

As illustrated in FIGS. 5(a) and 5(b), when content of a broadcast channel corresponding to a channel selection command of a user is sports content, the sports content may contain first and second broadcast images 310 and 310' and an advertisement image 320 between the first and second broadcast images 310 and 310'. Or, the content may contain the first and second broadcast images 330 and 330' and first advertisement image 340, a highlighted image 350, and a second advertisement 340' between the first and second broadcast images 330 and 330'.

For example, when the content corresponds to a baseball game, the content may include a game image for each inning and an advertisement image provided between innings, as illustrated in FIG. 5(a).

In another example, when the image corresponds to a soccer game, the content may include game images of the first half and the second half and an advertisement image and highlighted image provided between the game images of the first half and the second half, as illustrated in FIG. 5(b).

When the advertisement image contained in the content is displayed, the user may switch to another broadcast channel during reproduction of the advertisement image. During display of the specific content of another broadcast channel, the processor 140 may analyze image data of the content of the original channel (the sports channel) to analyze whether a currently-reproduced image of the content is a sports image or an advertisement image.

For example, as illustrated in FIG. 6, in response to a user command for channel switching being input during display of an advertisement image 410 included in the content, the processor 140 may determine whether the content analyzing mode is activated. As the determination result, upon determining that the content analyzing mode is activated, the processor 140 may analyze image data of the content to determine whether a currently-reproduced image of the content is a sports image or an advertisement image.

As illustrated in the drawing, a first frame 410-1 may be a last frame of the advertisement image 410, and a second image frame 420-1 represents a resumption of a sports game after the advertisement image 410. Accordingly, the processor 140 may compare and analyze a current frame corresponding to a currently-reproduced image of the content with a previous frame to determine whether the currently-reproduced image of the content is a broadcast image or an advertisement image. When the current frame is the second image frame 420-1, the processor 140 may compare and analyze the second image frame 420-1 and the first image frame 410-1 (the previous image frame) to determine that the currently-reproduced image of the content is a broadcast image.

Upon determining that the currently-provided image is a broadcast image, the processor 140 may control the output interface 120 to output the content. Accordingly, the output interface 120 may output the content to the display 121 and the speaker 123, and thus the display 121 may display image data of the content, and the speaker 123 may output audio data of the content in the form of audible sounds. According to the following exemplary embodiment, the processor 140 may determine whether the currently-reproduced image of the content is a broadcast image or an advertisement image.

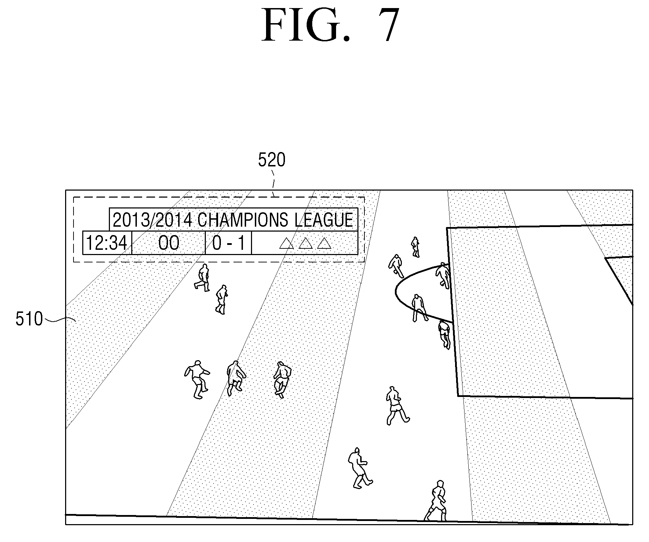

FIG. 7 is a diagram illustrating an example in which a broadcast receiving apparatus determines whether a currently-reproduced image of content is a broadcast image, according to an exemplary embodiment.

As illustrated in FIG. 7, when the content of a broadcast channel corresponds to a soccer game, the processor 140 may analyze whether a current frame corresponds to the soccer game or an advertisement image, based on a field color region 510 indicating a soccer field. In detail, the storage 170 may store field information, such as color information of fields of all sports. For example, a soccer and golf field may contain a lot of green areas, and thus the color information stored in the storage 170 may contain relative green color information. In addition, with respect to ice hockey and ski sports, the field may contain a lot of white areas, and thus the color information stored in the storage 170 may contain relative white color information.

Accordingly, the processor 140 may determine whether a frame contains green color, which could be predefined as a field color of a soccer game such that the processor 140 may determine whether the frame corresponds to a soccer game. That is, the processor 140 may determine whether several consecutive frames before or after the current frame contain green color. As the determination result, when the consecutive frames before or after the current frame contain green color, the processor 140 may determine that the current frame corresponding to the currently-reproduced image correspond to a soccer game (broadcast image).

However, the present disclosure is not limited thereto, and when the frame corresponding to the currently-reproduced image contains green color, the processor 140 may calculate a green color ratio value, and when the calculated green color ratio value is equal to or more than a preset threshold value, the processor 140 may determine that the frame corresponding to the currently-reproduced image corresponds to a soccer game.

As illustrated in FIG. 7, when the content of the broadcast channel includes a soccer game, the processor 140 may analyze whether the content is a sport related broadcast image or an advertisement image based on a region 520 for showing a game processing situation.

In detail, in response to a content analyzing mode being activated during output of the content of the broadcast channel, the processor 140 may compare pixel values of a plurality of image frames constituting image data of the content of the broadcast channel to detect a region showing of the game processing situation. In general, a score board image may include a soccer game time, team information, or score information and may be displayed in an upper portion of a soccer game image. Furthermore, the score board image may not vary very frequently and thus may maintain a constant pixel value. Accordingly, the processor 140 may compare pixel values of a plurality of frames to detect a region having a constant pixel value as the score board image. Then, the processor 140 may use the region for showing of a game processing situation and store the region in the storage 170.

In response to a user command for channel switching to another broadcast channel from the broadcast channel being input, the processor 140 may detect a region corresponding to the aforementioned pre-stored region from a current frame of the content of the broadcast channel during displaying the specific content of another broadcast channel. Then the processor 140 may determine whether a pixel value of the region is within a preset threshold range, and when the pixel value of the detected region is within the preset threshold range, the processor 140 may determine that the current frame corresponding to the currently-reproduced image corresponds to a soccer game, not an advertisement.

According to an embodiment, upon determining that the currently-produced image of the content of the broadcast channel is a broadcast image, the processor 140 may control the output interface 120 to output the content of the broadcast channel.

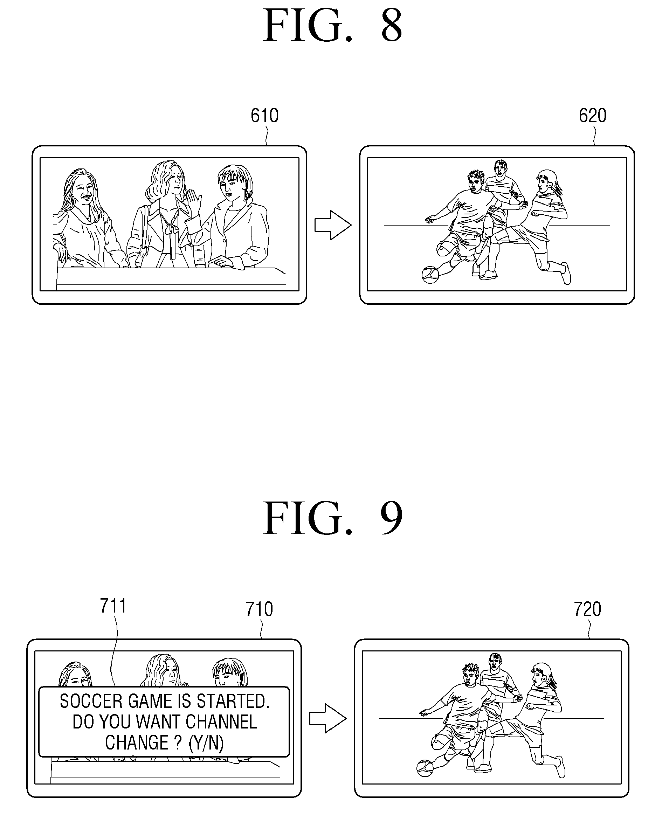

FIG. 8 is a diagram illustrating an example in which a broadcast receiving apparatus returns to a channel when content of the channel is resumed, according to an exemplary embodiment;

As illustrated in FIG. 8, when the sports content of a broadcast channel is output and a content analyzing mode is activated, in response to a channel change command to another broadcast channel being input, the output interface 120 may output the specific content 610 of another broadcast channel. During output of the specific content 610 of another broadcast channel, the processor 140 may analyze whether a currently-provided image of the sports content of the broadcast channel is a broadcast image or an advertisement image, based on the aforementioned embodiments of the present disclosure.

As the analysis result, upon determining that the currently-provided image of the content of the broadcast channel is an advertisement image, the processor 140 may control the output interface 120 to output the specific content 610 of another broadcast channel. Upon determining that the currently-provided image of the content of the broadcast channel is a sports game, the processor 140 may determine that the sports game is resumed and control the output interface 120 to output the content of the broadcast channel. Accordingly, the display 121 may output the content 620 of the broadcast channel.

As such, during output of the specific content of another broadcast channel, the broadcast receiving apparatus 100 may analyze content of a previous broadcast channel and may switch back to output the content of the previous broadcast channel from the specific content of the another broadcast channel according to whether the currently-reproduced image of the content of the previous broadcast channel is a broadcast image or an advertisement image.

Accordingly, when a previous broadcast channel currently corresponds to an advertisement image, the user may watch another broadcast channel first and then watch the broadcast image of the previous broadcast channel directly from a time point when the broadcast image is resumed without frequently checking whether the advertisement is terminated and the broadcast image is resumed while viewing the specific content of the another broadcast channel.

FIG. 9 is a diagram illustrating an example in which a broadcast receiving apparatus returns to a channel when content of the channel is resumed, according to an exemplary embodiment.

As illustrated in FIG. 9, when the content of a broadcast channel is output and a content analyzing mode is activated, in response to a channel change command being input, the output interface 120 may output the specific content 710 of another broadcast channel. During output of the specific content 710 of the another broadcast channel, the processor 140 may analyze whether a currently-provided image of the content of the broadcast channel is a broadcast image or an advertisement image, based on the aforementioned embodiments.

As the analysis result, upon determining that the currently-provided image of the content of the broadcast channel is an advertisement image, the processor 140 may control the output interface 120 to output the specific content 710 of the another broadcast channel. Upon determining that the currently-provided image of the content of the broadcast channel is a sports image, the processor 140 may determine that a sport game is resumed and control the output interface 120 to output on-screen display (OSD) information 711 (the above-mentioned message) to inform the user that the sports game has been resumed on a screen. Accordingly, the display 121 may display the OSD information 711 showing that broadcast is started/resumed on a screen while displaying the specific content 710 of the another broadcast channel. In response to a user channel change command being input during display of the OSD information 711, the display 121 may switch back to display the content 620 of the broadcast channel on a screen according to a control command of the processor 140.

Accordingly, when a previous broadcast channel corresponds to an advertisement image, the user may watch another broadcast channel first and then watch the broadcast image of the previous broadcast channel directly from a time point when the broadcast image is resumed without frequently checking whether the advertisement image is terminated and the broadcast image is resumed while viewing the specific content of the another broadcast channel.

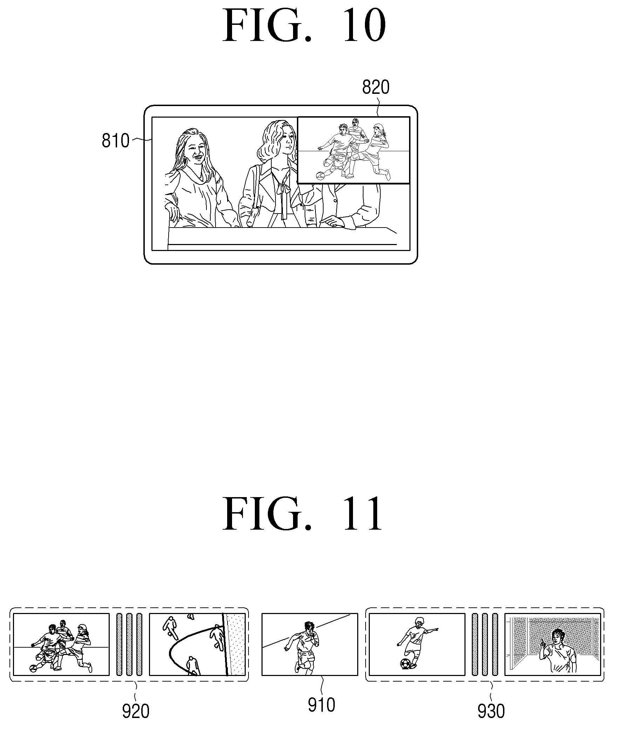

FIG. 10 is a diagram illustrating an example in which a broadcast receiving apparatus returns to a channel when content of the channel is resumed, according to an exemplary embodiment.

As illustrated in FIG. 10, when the content of a broadcast channel is output and a content analyzing mode is activated, in response to a channel switching command being input, the output interface 120 may output specific content 810 of another broadcast channel. During output of the specific content 810 of the another broadcast channel, the processor 140 may analyze whether a currently-provided image of the content of the broadcast channel is a broadcast image or an advertisement image, based on the aforementioned embodiments.

As the analysis result, upon determining that the currently-provided image of the content of the broadcast channel is an advertisement image, the processor 140 may control the output interface 120 to output the specific content 810 of the another broadcast channel. Upon determining that the currently-provided image of the content of the broadcast channel is a sports game, the processor 140 may determine that the sports game is resumed and control the output interface 120 to concurrently output the specific content 810 of the another broadcast channel and output the content 820 of the broadcast channel on a sub screen. Accordingly, the display 121 may display specific content 810 of the another broadcast channel on the main screen and display the content 820 of the broadcast channel on the sub screen.

However, the present disclosure is not limited thereto, and according to user setting, the display 121 may display the sports content 820 of the broadcast channel on the main screen and display the specific content 810 of the another broadcast channel on the sub screen. Accordingly, a user may simultaneously watch the specific content of a current channel and sports content of a previous channel at a time point in which the sports game is resumed.

As described above, when the content of the broadcast channel is output and a content analyzing mode is activated, in response to a channel change command to another broadcast channel being input, the processor 140 may analyze the content of the broadcast channel and control the output interface 120 to output the content of the broadcast channel at a time point when a preset event occurs during display of the specific content of another broadcast channel.

FIG. 11 is a diagram illustrating an example in which a broadcast receiving apparatus switches back to a channel at a time point in which an event occurs according to an exemplary embodiment.

When the content of a broadcast channel includes a soccer game, the preset event may be a scoring scene. In this case, according to an exemplary embodiment, the processor 140 may detect a region showing the scores of the soccer game (for example, the region showing a score board), where the region may be displayed in a corner of the currently-provided image of the content. Then, the processor 140 may determine whether a number contained in the detected region is changed. According to the determination result, upon determining that the number contained in the region is changed, the processor 140 may determine that a scoring event occurs.

According to an exemplary embodiment, the processor 140 may analyze audio data of the content (for example, the content may contain a soccer game), and in response to a time period having an audio signal level equal to or greater than a preset threshold level being detected, the processor 140 may determine that a scoring event occurs.

According to an embodiment, upon determining that an event occurs, the processor 140 may control the output interface 120 to output the content of a broadcast channel. In this case, the processor 140 may control the output interface 120 to output the content of the broadcast channel from a time point in which the event occurs.

In detail, as illustrated in FIG. 11, in response to the image 910 in which a scoring event occurs being detected, the processor 140 may generate a highlighted image (for example, a highlight playback) including peripheral periods 920 and 930, which are respectively a preset time period before and after the image 910 and control the output interface 120 to output at least one of the highlight playback and the sport image content of the broadcast channel. According to such a control command, the output interface 120 may stop outputting the specific content of another broadcast channel and may sequentially output the highlight playback in which an event occurs and the sport image content of the broadcast channel.

However, the present disclosure is not limited thereto, and the output interface 120 may output the highlighted image and the content of the broadcast channel on a sub screen while outputting the specific content of another broadcast channel on a main screen or may output only the highlight image on the sub screen while outputting the specific content of the another broadcast channel on the main screen, according to a control command of the processor 140.

Hereinafter, a method for controlling the broadcast receiving apparatus 100 according to the present disclosure will be described in detail.

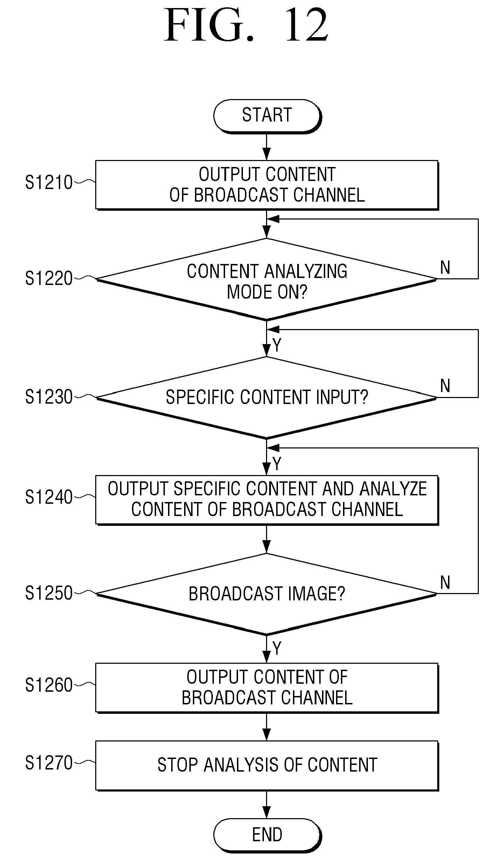

FIG. 12 is a flowchart of a method for controlling the broadcast receiving apparatus 100 according to an exemplary embodiment.

As illustrated in FIG. 12, the broadcast receiving apparatus 100 may tune a broadcast channel corresponding to a user command and receive a broadcast signal of the tuned broadcast channel. Upon receiving the broadcast signal of the tuned broadcast channel, the broadcast receiving apparatus 100 may output the content that is signal-processed into a form suitable for output on a screen (S1210). Then the broadcast receiving apparatus 100 may determine whether a user command for activation of a content analyzing mode is input during output of the content of the broadcast channel (S1220).

As the determination result, upon determining that the user command for activation of the content analyzing mode is input, the broadcast receiving apparatus 100 may enter the content analyzing mode for analysis of the content of the broadcast channel. While the content analyzing mode is activated, the broadcast receiving apparatus 100 may determine whether a specific content is input (S1230). As the determination result, upon determining that the specific content corresponding to the user command is input, the broadcast receiving apparatus 100 may analyze the content of the broadcast channel during output of the specific content on a screen (S1240). Whether the content of the broadcast channel analyzed during output of the specific content satisfies a preset condition may be determined. In detail, the broadcast receiving apparatus 100 may analyze the content of the broadcast channel and determine whether a currently-reproduced image of the content of the broadcast channel is a broadcast image or an advertisement image during output of the specific content (S1250).

In detail, the broadcast receiving apparatus 100 may analyze at least one of image data, audio data, and additional data, such as subtitles data, contained in the content of the broadcast channel, and pre-stored additional information in relation to a plurality of broadcast channels to determine whether a currently-provided image of the content of the broadcast channel is an advertisement image.

As the determination result, when the currently-provided image of the content of the broadcast channel is an advertisement image, the broadcast receiving apparatus 100 may continuously output the specific content. As the analysis result, when the currently-provided image of the image content of the broadcast channel is a broadcast image, the broadcast receiving apparatus 100 may stop outputting the specific content and output the content of the broadcast channel (S1260).

According to an exemplary embodiment, when the specific content is content of another broadcast channel, the broadcast receiving apparatus 100 may switch from another broadcast channel back to a broadcast channel to output the content of the broadcast channel upon determining that a currently-provided image of the content of the broadcast channel is a broadcast image.

According to an exemplary embodiment, when the currently-provided image of the content of the broadcast channel is a broadcast image, the broadcast receiving apparatus 100 may output one of the specific content and the content of the broadcast channel on a main screen and output the other on a sub screen.

According to an exemplary embodiment, when the currently-provided image of the content of the broadcast channel is a broadcast image, the broadcast receiving apparatus 100 may display OSD information on a screen that currently outputs the specific content in order to inform the user that the broadcast channel is started/resumed. In response to a user command being input during display of the OSD information, the broadcast receiving apparatus 100 may stop outputting the specific content and switch back from a current channel to output the content of the broadcast channel.

In the aforementioned operation S1040, when the content of the broadcast channel is sports content, the broadcast receiving apparatus 100 may analyze whether a preset event occurs in a sports game. In an embodiment, the broadcast receiving apparatus 100 may determine whether the preset event occurs based on at least one of score information contained in a region showing a game processing situation extracted from image data of the sports content of the broadcast channel and an audio signal level of audio data of the sports content. As the determination result, when the preset event occurs in the sports game, the broadcast receiving apparatus 100 may stop outputting the specific content and output the sports content of the broadcast channel.

For example, when the content includes a soccer game, the preset event may be a scoring scene. Through such analysis, upon determining that a scoring event occurs and the user is now viewing the specific content of another channel, the broadcast receiving apparatus 100 may display the soccer game of the broadcast channel on a sub screen. In this way, when the user selects a sub screen, the broadcast receiving apparatus 100 may stop outputting the specific content and output sports content of the broadcast channel.

Then the broadcast receiving apparatus 100 may stop analysis of the content of the broadcast channel according to a preset condition (S1270). When a channel is switched to another broadcast channel while analysis of the content of the broadcast channel is stopped, the broadcast receiving apparatus 100 may re-perform the aforementioned process and analyze the content of the corresponding broadcast channel.

According to an exemplary embodiment, the broadcast receiving apparatus 100 may stop analysis of the content of the broadcast channel or deactivate an activated content analyzing mode at a time point in which reproduction of the image of the content of the broadcast channel is terminated, based on additional information pre-stored in relation of a plurality of broadcast channels. According to an exemplary embodiment, the broadcast receiving apparatus 100 may stop analysis of the content of the broadcast channel or deactivate an activated content analyzing mode at a time point in which a predetermined threshold time period elapses based on a time point in which a user command for channel switch is input.

The aforementioned method for controlling the broadcast receiving apparatus 100 may be embodied as an algorithm executable in a computer, and the algorithm may be stored as a program in a non-transitory computer readable medium.

In addition, in the above disclosure, the broadcast receiving apparatus 100 seems to analyze the content of the broadcast channel after the user switches channels. However, this mechanism should be only regarded as an embodiment, not a limitation. In an exemplary embodiment, the broadcast receiving apparatus allows a user to pre-select a specific channel to be analyzed without any channel change. Furthermore, the broadcast receiving apparatus further allows a user to select a time period for the broadcast receiving apparatus to analyze the specific channel.

For example, a user may input user command through the user interface to set channel #100 as an example of a specific channel to be analyzed and set the channel #100 be analyzed between 1 to 2 pm. If the user does not watch the channel #100 and uses a broadcast receiving apparatus to perform another service (for example, an internet service), the broadcast receiving apparatus may analyze the content of the channel #100 from 1 pm to 2 pm, and upon determining that an advertisement of the channel #100 is terminated and a program of the channel #100 is started or a preset highlighted image is transmitted, the broadcast receiving apparatus may notify the user by showing a message, picture in picture (PIP), picture by picture (PBP), picture out picture (POP), picture with picture (PWP), an OSD message, a beep sound, or the like to allow the user to select to view the channel #100 or to automatically switch into the channel #100.

A process performed according to an exemplary embodiment may be stored in a non-transitory computer readable in the form of a program. The non-transitory computer readable medium is a medium which does not store data temporarily such as a register, cache, and memory but stores data semi-permanently and is readable by devices. More specifically, the aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

The foregoing exemplary embodiments and advantages are merely exemplary and are not to be construed as limiting the present disclosure. The present teaching can be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. A broadcast receiving apparatus (100, 100-1, 100-2) comprising:
a tuner (110) configured to receive a broadcast signal of a tuned broadcast channel;
an output interface(120) configured to output content that is signal-processed from the broadcast signal on a screen image;
an input interface (130) configured to receive a specific content; and
a processor (140) configured to control the tuner to receive the broadcast signal of the broadcast channel in response to the specific content being input through the input interface while a content analyzing mode is activated, and to analyze the content signal-processed from the broadcast signal received through the tuner during output of the specific content to the output interface and to output the content to the output interface when the content satisfies a preset condition.

2. The broadcast receiving apparatus (100, 100-1, 100-2) as claimed in claim 1, wherein the processor (140) analyzes whether a currently-provided image of the content is an advertisement image or a broadcast image during output of the specific content, and as the analysis result, upon determining that the currently provided image of the image content is the broadcast image, the processor outputs the image content to the output interface (120).

3. The broadcast receiving apparatus (100, 100-1, 100-2) as claimed in claim 2, wherein the processor (140) analyzes at least one of image data, audio data, and subtitles data, contained in the content, and pre-stored additional information in relation to a plurality of broadcast channels to determine whether the currently-provided image of the content is an advertisement image or a broadcast image.

4. The broadcast receiving apparatus (100, 100-1, 100-2) as claimed in claim 2 or claim 3, wherein the tuner (110) comprises:
a first tuner (111)configured to receive the broadcast signal of the broadcast channel; and
a second tuner (113) configured to receive a broadcast signal of another broadcast channel,
wherein the specific content is carried by the broadcast signal of the another broadcast channel, and the processor (140) analyzes the content signal-processed from the broadcast signal of the broadcast channel, received through the first tuner, during output the specific content signal-processed from the broadcast signal of the another broadcast channel, received through the second tuner, and upon determining that the currently-provided image of the content is a broadcast image, the processor outputs the image content to the output interface (120).

5. The broadcast receiving apparatus (100, 100-1, 100-2) as claimed in any one of claims 2 to 4, wherein, as the analysis result, upon determining that the currently-provided image of the content is a broadcast image, the processor (140) generates an image signal and outputs the image signal to the output interface (120) to output one of the specific content and the content on a main screen and to output the other on a sub screen.

6. The broadcast receiving apparatus (100, 100-1, 100-2) as claimed in claim 5, wherein:
the output interface (120) comprises a display (121) configured to display image data of the image content; and
the display displays the specific content and the content using one of picture in picture (PIP), picture by picture (PBP), and picture of picture (POP).

7. The broadcast receiving apparatus (100, 100-1, 100-2) as claimed in any one of claims 2 to 6, wherein, as the analysis result, upon determining that the currently-provided image of the content is a broadcast image, the processor (140) generates on screen display (OSD) information for informing that the content of the broadcast signal is started and outputs the OSD information to the output interface (120), and in response to a user command being input during display of the OSD information, the processor outputs the content to the output interface.

8. The broadcast receiving apparatus (100, 100-1, 100-2) as claimed in any one of claims 1 to 7, wherein, when content of the broadcast channel is sports content, the processor (140) analyzes whether a preset event occurs in a sports game, and as the analysis result, when the preset event occurs in the sports game, the processor outputs the sports content to the output interface (120).

9. The broadcast receiving apparatus (100, 100-1, 100-2) as claimed in claim 8, wherein the processor (140) analyzes whether the preset event occurs based on at least one of score information contained in a region showing a game process extracted from image data of the sports content and an audio signal level of audio data included in the sports content.

10. The broadcast receiving apparatus (100, 100-1, 100-2) as claimed in any one of claims 1 to 9, further comprising a user interface (150) configured to receive a user command,
wherein the processor (140) activates a content analyzing mode for analysis of content of the broadcast channel according to a user command input through the user interface, and stops analysis of the content or deactivates the content analyzing mode based on at least one of a time point in which reproduction of the content is terminated based on additional information pre-stored in relation to a plurality of broadcast channels and a time point in which a predetermined threshold time period elapses based on a time point in which a user command for channel change is input.

11. A method for controlling a broadcast receiving apparatus (100, 100-1, 100-2), the method comprising:
receiving a broadcast signal of a tuned broadcast channel;
outputting image data of content signal-processed from the received broadcast signal on a screen;
receiving the broadcast signal of the broadcast channel in response to a specific content corresponding to a user command being input while a content analyzing mode is activated;
analyzing the content that is signal-processed from the received broadcast signal during output of the specific content on the screen image; and
outputting the content when the content satisfies a preset condition.

12. The method as claimed in claim 11, wherein:
the analyzing comprises analyzing whether a currently-provided image of the content signal-processed from the broadcast signal of the broadcast channel is an advertisement image or a broadcast image during output of the specific content; and
the outputting of the content comprises, as the analysis result, upon determining that the currently-provided image of the content is the broadcast image, outputting the content.

13. The method as claimed in claim 12, wherein:
the analyzing comprises analyzing at least one of image data, audio data, and subtitles data, contained in the content, and pre-stored additional information in relation to a plurality of broadcast channels to determine whether the currently-provided image of the content is an advertisement image or a broadcast image.

14. The method as claimed in claim 12 or claim 13, wherein the receiving comprises receiving the broadcast signal of the broadcast channel and a broadcast signal of another broadcast channel through at least one of first and second tuners; wherein the specific content is carried by the broadcast signal of another broadcast channel, and the outputting of the content comprises analyzing the content signal-processed from the broadcast signal of the broadcast channel, received through the first tuner, during output of the specific content signal-processed from the broadcast signal of the another broadcast channel, received through the second tuner, and upon determining that the currently-provided image of the content is a broadcast image, outputting the content.

15. The method as claimed in any one of claims 12 to 14, wherein the outputting comprises, as the analysis result, upon determining that the currently-provided image of the image content is a broadcast image, generating an image signal and outputting the image signal to concurrently output one of the specific content and the content on a main screen and to output the other one on a sub screen.
